# EUROPEAN PATENT APPLICATION

(11) **EP 4 095 116 A1**
(43) Date of publication of application: **30.11.2022**
(21) Application number: 22168044.0
(22) Date of filing: 12.04.2022
(51) Int. Cl.: C04B 41/45, C04B 41/00, C04B 41/52, C04B 41/89, F01D 5/28, C23C 4/11, C23C 4/134, C04B 111/00

(54) **SUSPENSION PLASMA SPRAY COMPOSITION AND PROCESS FOR DEPOSITION OF RARE EARTH HAFNIUM TANTALATE BASED COATINGS**

(30) Priority: 26.05.2021 US 202117330529
(71) Applicant: General Electric Company, Schenectady, NY 12345 (US)
(72) Inventor: KIRBY, Glen Harold, Cincinnati, 45215 (US); BARBER, Evin Nathaniel, Cincinnati, 45215 (US); STANKO, Gary Michael, Cincinnati, 45215 (US)
(74) Representative: Openshaw & Co.

(57) **Abstract**

Methods for forming a coating (108) on a surface (103) of a substrate (102) are provided. The method can include: preheating the surface (103) of the substrate (102); spraying a slurry suspension onto the surface (103) of the substrate (102) to form a coating (108), wherein the slurry composition comprises a rare earth compound, a sintering agent, and a solvent, wherein the rare earth compound has the formula: A_{1-b}B_{b}Z_{1-d}D_{d}MO₆ where A is Al, Ga, In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof; b is 0 to 0.5; Z is Hf, Ti, or a mixture thereof; D is Zr, Ce, Ge, Si, or a mixture thereof; d is 0 to 0.5; and M is Ta, Nb, or a mixture thereof; and thereafter, heat treating the coating (108) to densify the coating (108) from an initial porosity to a sintered porosity.

## Description

### FIELD OF TECHNOLOGY

Embodiments of the present invention generally relate to environmental barrier coatings for ceramic components, along with methods of making the same.

### BACKGROUND

Higher operating temperatures for gas turbine engines are continuously being sought to improve engine efficiency. However, as operating temperatures increase, the high temperature durability of the components of the engine must correspondingly increase. Significant advances in high temperature capabilities have been achieved through the formulation of iron, nickel, and cobalt-based superalloys. Still, with many hot gas path components constructed from superalloys, thermal barrier coatings (TBCs) can be utilized to insulate the components and can sustain an appreciable temperature difference between the load-bearing alloys and the coating surface, thus limiting the thermal exposure of the structural component.

While superalloys have found wide use for components used throughout gas turbine engines, and especially in the higher temperature sections, alternative lighter-weight substrate materials have been proposed, such as ceramic matrix composite (CMC) materials. CMC and monolithic ceramic components can be coated with environmental barrier coatings (EBCs) to protect them from the harsh environment of high temperature engine sections. EBCs can provide a dense, hermetic seal against the corrosive gases in the hot combustion environment.

Silicon carbide and silicon nitride ceramics undergo oxidation in dry, high temperature environments. This oxidation produces a passive, silicon oxide scale on the surface of the material. In moist, high temperature environments containing water vapor, such as a turbine engine, both oxidation and recession occurs due to the formation of the passive silicon oxide scale and subsequent conversion of the silicon oxide to gaseous silicon hydroxide, which results in dimensional loss of the material. For component applications of silicon-based substrates in turbine engines, such material loss can open up clearances and may lead to efficiency losses, and ultimately may lead to perforation of the component.

As such, an environmental barrier coating (EBC) is applied onto the surface of the ceramics to help protect the underlying component. Current materials commonly used for environmental barrier coatings on CMC's include celsian-phase barium strontium aluminosilicate (BSAS) and rare earth silicates. All of these materials are relatively stable in steam compared to the CMC and can prevent penetration of steam to the CMC if present as a dense coating layer.

However, these materials have varying resistance against molten environmental contaminant compositions, particularly those containing oxides of calcium, magnesium, aluminum, silicon, and mixtures thereof. Dirt, ash, and dust ingested by gas turbine engines, for instance, are often made up of such compounds, which often combine to form contaminant compositions comprising mixed calcium-magnesium-aluminum-silicon-oxide systems (Ca-Mg-Al-Si-O), hereafter referred to as "CMAS." At the high turbine operating temperatures, these environmental contaminants can adhere to the hot barrier coating surface, and thus cause damage to the EBC. For example, CMAS can form compositions that are liquid or molten at the operating temperatures of the turbines. The molten CMAS composition can dissolve the barrier coating, or can fill its porous structure by infiltrating the pores, channels, cracks, or other cavities in the coating. Upon cooling, the infiltrated CMAS composition solidifies and reduces the coating strain tolerance, thus initiating and propagating cracks that may cause delamination and spalling of the coating material.

In particular, molten dust reacts strongly with BSAS to form a low temperature eutectic and phases that are not stable in steam. Molten dust is less corrosive against rare earth silicates. Some rare earth silicates (e.g., those comprising gadolinium, erbium, and yttrium) react with the molten dust to form highly refractory "apatite" phases. Others rare earth silicates allow CMAS penetration but do not suffer melt point suppression. All rare earth silicates, however, are mechanically weakened by their interaction with molten dust, such that subsequent erosion and impact events can more easily take off the coating.

A need exists, therefore, for coating compositions that are less susceptible to molten dust attack, and also less susceptible to subsequent gas erosion, particle erosion, and particle impact over the current state-of-the-art EBC materials.

### BRIEF DESCRIPTION

Aspects and advantages will be set forth in part in the following description, or may be obvious from the description, or may be learned through practice of the invention.

Methods are generally provided for forming a coating on a surface of a substrate. In one embodiment, the method comprising: preheating the surface of the substrate to a preheat temperature, wherein the substrate comprises a ceramic matrix composite; thereafter, spraying a slurry suspension onto the surface of the substrate to form a coating, wherein the slurry composition comprises a rare earth compound, a sintering agent, and a solvent, wherein the rare earth compound has the formula: A_{1-b}B_{b}Z_{1-d}D_{d}MO₆ where A is Al, Ga, In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof; b is 0 to 0.5; Z is Hf, Ti, or a mixture thereof; D is Zr, Ce, Ge, Si, or a mixture thereof; d is 0 to 0.5; and M is Ta, Nb, or a mixture thereof; and thereafter, heat treating the coating at a sintering temperature to densify the coating from an initial porosity to a sintered porosity.

These and other features, aspects and advantages will become better understood with reference to the following description and appended claims. The accompanying drawings, which are incorporated in and constitute a part of this specification, illustrate embodiments of the invention and, together with the description, serve to explain certain principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended Figs., in which:
FIG. 1 shows an exemplary coated component having a substrate with a coating system thereon;
FIG. 2 shows an exemplary coated component having a substrate with a coating system thereon; and
FIG. 3 is a schematic cross-sectional view of a gas turbine engine which may include the coated component of FIG. 1 therein.

Repeat use of reference characters in the present specification and drawings is intended to represent the same or analogous features or elements of the present invention.

### DETAILED DESCRIPTION OF PARTICULAR EMBODIMENTS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

In the present disclosure, when a layer is being described as "on" or "over" another layer or substrate, it is to be understood that the layers can either be directly contacting each other or have another layer or feature between the layers, unless expressly stated to the contrary. Thus, these terms are simply describing the relative position of the layers to each other and do not necessarily mean "on top of' since the relative position above or below depends upon the orientation of the device to the viewer.

As used herein, the term "barrier coating(s)" can refer to environmental barrier coatings. The barrier coatings herein may be suitable for application to "ceramic components," or simply "components," found in high temperature environments (e.g., operating temperatures of 2500 °C), such as those present in gas turbine engines. Examples of such components can include, for example, combustor components, turbine blades, shrouds, nozzles, heat shields, and vanes.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth. As used herein, "Ln" refers to a rare earth element or a mixture of rare earth elements. More specifically, the "Ln" refers to the rare earth elements of scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), or mixtures thereof.

A suspension plasma spray ("SPS") deposition process is generally provided for forming a coating on a surface of a substrate. The SPS deposition process generally involves spraying a slurry suspension that includes a rare earth compound dispersed within a solvent. For example, rare earth hafnium tantalate-based materials are showing to be highly refractory, recession resistant, erosion resistant, and molten dust resistant. As such, these materials show potential to serve as a layer of an EBC (e.g., the outermost layer) to promote durability in hot and harsh engine environments, such as within the hot gas path of a turbomachine. In particular, these rare earth compounds are compatible with mullite-based bond coats, as opposed to the current rare earth silicates that are not compatible with mullite.

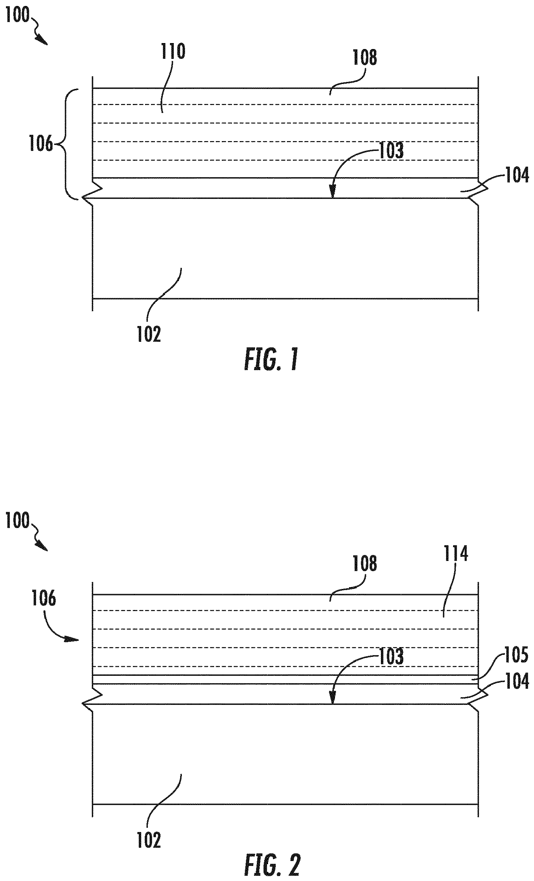

Referring now to the drawings, FIG. 1 shows an exemplary coated component 100 with a substrate 102 having a coating system 106 thereon formed using the SPS process. Generally, the coating system 106 includes an optional bond coating 104 on the surface 103 of the substrate and an EBC 108 on the optional bond coating 104. In the embodiment shown, the bond coating 104 is directly on the surface 103 without any layer therebetween. However, in other embodiments, one or more layers can be positioned between the bond coating 104, when present, and the surface 103. In other embodiments, the EBC 108 may be formed directly on the surface 103 of the substrate 102.

The EBC 108 may include any combination of one or more layers 110 formed from materials selected from typical EBC or thermal barrier coating ("TBC") layer chemistries, including but not limited to rare earth silicates (e.g., mono-silicates and di-silicates), aluminosilicates (e.g., mullite, barium strontium aluminosilicate (BSAS), rare earth aluminosilicates, etc.), hafnia, zirconia, stabilized hafnia, stabilized zirconia, rare earth hafnates, rare earth zirconates, rare earth gallium oxide, etc.

According to one particular embodiment, a rare earth compound (e.g., as in Formula 1 discussed below) may be applied via a SPS deposition to form at least one of the layers 110 of the EBC 108. In the SPS deposition process, a slurry suspension is applied over the surface 103 of the substrate (and any layer thereon, such as bond coating 104 or outer layer 110 of the EBC 108) to form a coating thereon, with the slurry suspension including the rare earth compound and a sintering aid dispersed within a solvent or solvent system. For instance, solvents may include water, an alcohol, an organic solvent, or mixtures thereof.

The SPS process utilizes fine particles of the intended coating material, or precursor thereof, dispersed into suspension in a liquid medium and passed through a plasma spray torch (sometimes referred to as a plasma spray gun) to deposit the material on the surface of the component. In one embodiment, the substrate may be preheated for application of the plasma spray, as well as cleaning the substrate. For example, the substrate's surface may be preheated to a preheat temperature of 200 °C to 1000 °C.

During plasma spray, a plasma torch may be utilized (e.g., such as the Mettech, 9MB, SG100, etc.) The plasma torch has, in one embodiment, an amperage range of 150-200 amps during the SPS process. In particular embodiments, the plasma torch has a plasma gas during the SPS process that includes argon (or another inert gas), nitrogen, hydrogen, helium, or a mixture thereof. For example, the plasma gas may have a composition that includes 75% Argon, 10% Nitrogen, and 15% Hydrogen, or may include 100% Helium, or may include a mixture of Helium and Argon (or another inert gas). During the SPS process, the total gas flow of the plasma gas may be 200 liters per minute (lpm) to 250 lpm. The plasma torch may have a spray distance (measured from a tip of the plasma torch to the surface of the substrate) of 60 mm to 165 mm to make coatings with varying microstructure as directed (e.g., 75 mm to 150 mm). The slurry may be fed at a rate of 1 milliliter per minute (mL/min) to 70 mL/min (e.g., 10 mL/min to 70 mL/min) and injected into the plasma gas composition. The plasma torch may traverse across the surface of the substrate at a rate of 1000 mm/s to 2000 mm/s, such as with an index distance including but not limited to 2.5 mm to 3.5 mm. As such, the SPS process may achieve a deposition rate of 2 mm to 4 mm per pass.

The average thickness per SPS cycle depends primarily on the slurry solids loading, sintering aid concentration (if present), and number of spray passes.

The slurry composition may generally comprise a mixture including water (or other solvent or solvent mixture), the rare earth compound in the form of a plurality of particles, an optional sintering aid, and other optional components, such as a dispersant and/or or other polymers that may serve as a pore former. In particular embodiments, the rare earth compound may have a concentration in the slurry that is 1 percent by volume to 20 percent by volume. Optional sintering aids may be included in the slurry up to 2% by volume of the slurry. For exemple, when present, the sintering aids may be included in the slurry at 0.1% by volume to 2% by volume of the slurry. Optional dispersants may be included in the slurry to occupy up to 3% by volume of the slurry. For exemple, when present, the dispersants may be included in the slurry at 0.1% by volume to 3% by volume of the slurry. The balance of the slurry volume is water, one or more solvents, or a mixture of solvents (e.g., a mixture of water and solvents).

Coatings of the present disclosure owe their remarkable structures and properties at least in part to the processing used in their fabrication. The process involves SPS, which, as discussed above, provides certain economic and manufacturing advantages over processes that require the use of vacuum equipment, such as PVD or vacuum plasma spray deposition. In certain embodiments, the process uses a feedstock comprising fine particles suspended in a liquid agent that is fed to a plasma spray torch in a controlled manner and injected into the plasma plume for deposition onto a substrate.

The particle size distribution can help influence the microstructure of the final coating including the amount of porosity and cracking observed. In particular embodiments, the particles have a median diameter typically, but not necessarily, in the range from 0.1 micrometers to 10 micrometers, or 0.2 micrometers to 10 micrometers. For example, the rare earth compound may be in the form of a plurality of particles having a particle size distribution of D50 of 0.2 µm to 2 µm and D95 of 10 µm to 30 µm. In an alternate embodiment, the rare earth compound may be in the form of a plurality of particles having a particle size distribution of D50 of 10 µm to 30 µm and D95 up to 100 µm. In yet another embodiment, the distribution can be bimodal, wherein from 0.1 vol. % to 50 vol % of the particles have a a smaller size described by the particle size distribution of D50 of 0.2 µm to 2 µm and D95 of 10 µm to 30 µm and the balance of the particles have a larger size described by the particle size distribution of D50 of 10 µm to 30 µm and D95 up to 100 µm.

Generally, the rare earth compounds described herein are less susceptible to molten dust, erosion, impact, and/or mixed mode degradation mechanisms than current EBC compositions. Thus, the rare earth compounds may result in a more robust EBC, compared to current-state-of-the-art EBC, that remains on the substrate material to protect it from recession against water vapor in turbine engine environments. In summary, these rare earth compounds exhibit better resistance against molten dust as compared to BSAS and rare earth silicate EBC materials, and may have higher hardness than BSAS and rare earth silicate materials, particular after exposure to molten dust (e.g., CMAS). Thus, the rare earth compounds add resistance to particle erosion and impact to a coating formed from such materials (e.g., an EBC).

In accordance with one particular embodiment, the rare earth compound used in the slurry deposition process to form at least one layer 110 of the EBC 108 has the formula:

A_{1-b}B_{b}Z_{1-d}D_{d}MO₆ (Formula 1)

where A is Al, Ga, In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof; b is 0 to 0.5 (e.g., 0 to 0.2, such as greater than 0 to 0.5 or 0.001 to 0.2); Z is Hf, Ti, or a mixture thereof; D is Zr, Ce, Ge, Si, or a mixture thereof; d is 0 to 0.5 (e.g., 0 to 0.2, such as 0.001 to 0.5 or 0.001 to 0.2); and M is Ta, Nb, or a mixture thereof. Compounds of Formula 1 may exihibit properties that are similar or better than existing BSAS and rare earth silicate materials in terms of stability in high temperature steam. Additionally, these materials may exhibit better resistance against molten dust as compared to BSAS and rare earth silicate EBC materials. Furthermore, these materials may have higher hardness than BSAS and rare earth silicate materials, particularly after exposure to molten dust. This results in the coating being more resistant to particle erosion and impact.

Generally, the compound having the Formula 1 may have multiple phases in the layer 110, such as an orthorhombic phase (e.g., with Pbcn or Pnma space groups), a tetragonal phase (e.g., with P4₂/mnm), or a monoclinic phase (e.g., with P2/c). As such, these materials may have a structure that is completely different (in terms of phase) than TBC layers formed from material containing hafnium oxides or zirconium oxides, which typically have the phase P21/c for monoclinic hafnia and monoclinic zirconia, or the phase P4₂/nmc for tetragonal hafnia and zirconia, or the cubic structure for hafnia and zirconia.

It is to be understood that the compound has distinct "sites" in its composition, with the "A site" being formed by A and/or B of Formula 1, the "Z site" being formed by Z and/or D of Formula 1, the "M site," and the oxygens.

In certain embodiment, the compound may include a single element in the "A site" such that b is 0 and A is an element selected from the group consisting of Al, Ga, In, Sc, Y, Ce, Pr, Nd, Pm, Sm, Eu, Gd, Tb, Dy, Ho, Er, Tm, Yb, Lu, Fe, Cr, Co, Mn, and Bi. In one exemplary embodiment, when b is 0 and A is Al, the compound is: AlZ_{1-d}D_{d}MO₆ (e.g., AlZMO₆ when d is 0, such as AlHfTaO₆). In another exemplary embodiment, when b is 0 and A is Y, the compound has the formula: YZ_{1-d}D_{d}MO₆ (e.g., YZMO₆ when d is 0, such as YHfTaO₆). In still another exemplary embodiment, when b is 0 and A is Er, the compound has the formula: ErZ_{1-d}D_{d}MO₆ (e.g., ErZMO₆ when d is 0, such as ErHfTaO₆).

The "A site" of the compound having Formula 1 includes, in one particular embodiment, aluminum (Al) in combination with another A element (e.g., Ga, In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof). Without wishing to be bound by any particular theory, it is believed that the presence of Al in the compound increases the hardness of the coating. In certain embodiments, Al is present in combination with another element at the "A site" and then the compound can be described as having the formula:

AlₓA_{1-x-b}B_{b}Z_{1-d}D_{d}MO₆ (Formula 2)

where x is 0.01 to 0.99; A is Ga, In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof; b is 0 to 0.5 (e.g., 0 to 0.2, such as 0.001 to 0.5 or 0.001 to 0.2); Z is Hf, Ti, or a mixture thereof; D is Zr, Ce, Ge, Si, or a mixture thereof; d is 0 to 0.5 (e.g., 0 to 0.2, such as 0.001 to 0.5 or 0.001 to 0.2); and M is Ta, Nb, or a mixture thereof. In certain embodiments, x is 0.05 to 0.9, such as 0.1 to 0.75. In one particular embodiment, up to half of the element mixture at the A site of the compound of Formula 1 may be Al (e.g., x is 0.1 to 0.5 in the compound of Formula 2).

In addition to Al, the "A site" of the compound having Formula 1 includes, in one particular embodiment, a combination of Al and gallium (Ga), with or without the presence of another A element (e.g., In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof). Without wishing to be bound by any particular theory, it is believed that the presence of Ga in the compound reduces the average ionic radius at the A site, which adjusts the coefficient of thermal expansion (CTE) of the layer 110. Thus, the amount of Ga in the compound may be used to control the CTE of the layer 110 to adjust it to be as close to the CTE of the adjacent layers within the coating system 106 and/or the CTE of the substrate 102.

When the compound includes Al and Ga in a portion of the "A site," then the compound can be descried as having the formula:

AlₓGa_{y}A_{1-x-y-b}B_{b}Z_{1-d}D_{d}MO₆ (Formula 3)

where x is 0.01 to 0.99 as described above with respect to Formula 2; y is 0.01 to 0.9; x + y is 1 or less; A is In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof; b is 0 to 0.5 (e.g., 0 to 0.2, such as 0.001 to 0.5 or 0.001 to 0.2); Z is Hf, Ti, or a mixture thereof; D is Zr, Ce, Ge, Si, or a mixture thereof; d is 0 to 0.5 (e.g., 0 to 0.2, such as 0.001 to 0.5 or 0.001 to 0.2); and M is Ta, Nb, or a mixture thereof. Another element may be present at the A site in the compound of Formula 3 when x + y is less than 1 (i.e., x + y > 1). In one particular embodiment, up to half of the element mixture at the A site of the compound of Formula 1 may be Al (e.g., x is 0.1 to 0.5 in the compound of Formula 3) and up to half of the element mixture at the A site of the compound of Formula 1 may be Ga (e.g., y is 0.1 to 0.5 in the compound of Formula 3).

In particular embodiments, erbium (Er), yttrium (Y), and/or holmium (Ho) may be included within the A site of the compounds having the Formula 1, Formula 2, and/or Formula 3 (i.e., A includes Er, Y, Ho, or a mixture thereof in any of Formulas 1, 2, or 3). Without wishing to be bound by any particular theory, it is believed that the Er, Y, and/or Ho may provide CMAS resistance to the layer 110 formed from such a compound.

Referring to Formulas 1-3 where b is greater than 0, boron (B) dopes the "A site" of the compound of Formula 1 to change the CTE and/or the sintering temperature of the layer formed from the compound. Additionally, B may migrate to other layers (e.g., the bond coating and/or thermally growth oxide layer) to help those layers interact with CMAS and/or to control the crystalization of those layers. However, in other embodiments, b is 0 such that no B is present in the compound.

The "Z site" of any of the compounds having Formula 1, 2, or 3 may be utilized, in one particular embodiment, to help control the CTE of the compound. Generally, the CTE of the compound is directly proportional to the ionic radius at the Z site. For example, the CTE of the compound decreases as the ionic radius of the Z site element decreases. In particular embodiments, the Z site may include Hf, Ti, or a mixture thereof, such as represented in Formula 4:

A_{1-b}B_{b}HfₕTiₜD₁₋ₕ₋ₜMO₆ (Formula 4)

where h is 0 to 1, t is 0 to 1, and h + t is greater than 0 to 1; A is Al, Ga, In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof; b is 0 to 0.5 (e.g., 0 to 0.2, such as 0.001 to 0.5 or 0.001 to 0.2); D is Zr, Ce, Ge, Si, or a mixture thereof; and M is Ta, Nb, or a mixture thereof. In one particular embodiment of Formula 4, the A site may include Al (e.g., as discussed above with respect to Formula 2), Ga (e.g., as discussed above with respect to Formula 3), and/or other materials, and/or B (e.g., as discussed above with respect to Formulas 1, 2, or 3). In certain embodiments, h + t may be greater than 0 but less than 1, such that another element (D) is present at the Z site.

In one embodiment, Hf is present in the compound such that h is greater than 0 to 1 (e.g., 0.05 to 1). In one particular embodiment when both Hf and Ti are present in the compound (i.e., both h and t are greater than 0), Hf may be present in a molar amount that is greater than the amount of Ti, such that h is greater than t. In one embodment, Hf may be the majority of the element in terms of molar ratio (i.e., h is 0.5 to 1) at the Z site. For example, h may be 1 in particular embodiments, such that t is 0 and 1-t is 0 (i.e., Hf is the sole element at the Z site). Without wishing to be bound by any particular theory, it is believed that Hf in the Z site may increase hardness and the steam resistance of the coating formed from such a compound.

In particular embodiments, where Hf is present in the "Z site" (i.e., Z includes Hf either alone or in combination with Ti and/or D), a combination of elements may be included in the "A site." For example, such a compound may have the formula:

AₓB_{b}Ln_{1-x-b}Hf_{1-t-d}TiₜD_{d}MO₆ (Formula 5)

where: A is Al, Ga, In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof; x is 0.01 to 0.99; b is 0 to 0.5 with 1-x-b being 0 to 0.99 such that Ln is present in the compound; Ln is Sc, Y, La, Ce, Pr, Nd, Pm, Sm, Eu, Gd, Tb, Dy, Ho, Er, Tm, ytterbium Yb, Lu, or a mixture thereof, and with Ln being different than A in terms of composition; t is 0 to 0.99; D is Zr, Ce, Ge, Si, or a mixture thereof; d is 0 to 0.5; the sum of t and d is less than 1 such that Hf is present in the compound; and M is Ta, Nb, or a mixture thereof.

When A includes Al in combination with another element, Formula 5 can be modified as follows:

AlₓA'ₐB_{b}Ln_{1-x-a-b}Hf_{1-t-d}TiₜD_{d}MO₆ (Formula 6)

where: x is 0.01 to 0.99 such that Al is present in the compound; A' is Ga, In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof; a is 0 to 0.99; b is 0 to 0.5, with 1-x-a-b being 0 to 0.99 such that Ln is present in the compound; Ln is Sc, Y, La, Ce, Pr, Nd, Pm, Sm, Eu, Gd, Tb, Dy, Ho, Er, Tm, ytterbium Yb, Lu, or a mixture thereof, and wherein Ln is different than A in terms of composition; t is 0 to 0.99; D is Zr, Ce, Ge, Si, or a mixture thereof; d is 0 to 0.5; the sum of t and d is less than 1 such that Hf is present in the compound; and M is Ta, Nb, or a mixture thereof.

For example, both Al and Ga may be present at the A site in combination with another element (with Hf included in the Z site), such as in the formula:

AlₓGa_{y}B_{b}Ln_{1-x-y-b}Hf_{1-t-d}TiₜD_{d}MO₆ (Formula 7)

where: x is 0.01 to 0.99 such that Al is present in the compound; y is 0.01 to 0.99 such that Ga is present in the compound; b is 0 to 0.5, with 1-x-a-b being 0 to 0.99 such that Ln is present in the compound; Ln is Sc, Y, La, Ce, Pr, Nd, Pm, Sm, Eu, Gd, Tb, Dy, Ho, Er, Tm, ytterbium Yb, Lu, or a mixture thereof, and wherein Ln is different than A in terms of composition; t is 0 to 0.99; D is Zr, Ce, Ge, Si, or a mixture thereof; d is 0 to 0.5; the sum of t and d is less than 1 such that Hf is present in the compound; and M is Ta, Nb, or a mixture thereof.

The material of the "M site" of the compound of any of Formulas 1-7 may influence the phase allowance and CTE of the resulting compound. In one particular embodiment, the M site may be Nb without any additional element present, which may provide better phase allowance and CTE matching when utilized as a layer within an EBC coating.

Particularly suitable compounds for use as a relatively thick or thin EBC layer may have a particularly close coefficient of thermal expansion (CTE) to the underlying CMC substrate. For example, aluminum containing hafnium tantalates may be particularly suitable compounds having CTEs relatively close to that of the CMC substrate. For example, aluminum containing hafnium tantalates may have the formula:

Al_{1-x-y}A'ₓA"_{y}HfTaO₆ (Formula 8)

where A' is Er, Sm, or a mixture thereof; x is 0.3 to 0.45; A" is In, Ga, or a mixture thereof; y is 0.15 to 0.35; and (x + y) is 0.5 to 0.7 such that Al is present from 0.3 to 0.5. In particular embodiments, A' is either Er or Sm, and/or A" is either In or Ga. The compound of Formula 8 may also be referring to Formula 1 where (referring to Formula 1) A includes Al in combination with two other elements (A' and A" of Formula 8); b is 0, Z is Hf, d is 0, and M is Ta.

Particularly suitable compounds for use as a relatively thin EBC layer (e.g., having a thickness of 100 µm or less) may have a coefficient of thermal expansion (CTE) that is close to the CTE of the underlying CMC substrate but not within a CTE matching relation. For example, erbium containing hafnium tantalates may be particularly suitable compounds for such EBC layers, and may have the formula:

Al_{1-x-y}ErₓGa_{y}HfTaO₆ (Formula 9)

where x is 0.4 to 0.6; y is 0 to 0.4; and (x + y) is 0.5 to 0.85 such that Al is present from 0.15 to 0.5. The compound of Formula 9 may also be referring to Formula 1 where (referring to Formula 1) A includes a combination of Er, Al, and Ga; b is 0, Z is Hf, d is 0, and M is Ta. As another example having a close CTE match to to a CMC substrate of SiC, scandium containing hafnium tantalates may be particularly suitable compounds for such EBC layers, and may have the formula:

AlₓSc₁₋ₓHfTaO₆ (Formula 10)

where x is 0.01 to 0.1 such that Al is present from 0.01 to 0.1 and Sc is present from 0.9 to 0.99. The compound of Formula 10 may also be referring to Formula 1 where (referring to Formula 1) A includes a combination of Al and Sc; b is 0; Z is Hf; d is 0; and M is Ta. Additionally, compound of Formula 10 may also be referring to Formula 2 where (referring to Formula 2) x is 0.01 to 0.1; A is Sc; b is 0; Z is Hf; d is 0; and M is Ta. Such a compound is not only a very close CTE match to a CMC substrate of SiC, but also is non-reactive with other EBC layers like rare earth silicates/disilicates, mullite, BSAS, silicon, etc.

As stated, the compound of any of Formulas 1-10 may be included in a layer of an EBC 108 of the coating system 106 so as to provide a material having minimal reaction with CMAS and has high hardness (e.g., for erosion resistance) after reaction with CMAS. Thus, the material of the compounds of any of Formulas 1-9 may be included within a layer of the EBC with other materials of an EBC layer, or may be used to form a separate layer within the EBC 108. In one embodiment, a layer of the EBC 108 is formed from the compound of any of Formulas 1-9, and may have a thickness of 1 µm to 1 mm (e.g., 1 µm to 100 µm).

In one embodiment, the slurry also includes a sintering aid that facilitates the densification of the slurry applied layer. For example, the sintering aid may lower the temperature required to densify the layer, such as to 1600 °C or less (e.g., 1300 °C to 1600 °C), 1500 °C or less (e.g., 1300 °C to 1600 °C), or 1450 °C or less (e.g., 1300 °C to 1450 °C).

For example, sintering aids that may be included within the slurry in combination with the rare earth compound include, but are not limited to, Si, SiO₂, Li₂O, LiCO₃, ZnO, Fe, Fe₂O₃, Fe₃O₄, FeSi₂, FeSi, Al₂O₃, copper-containing materials (e.g., CuO, Cu₂O, metallic Cu, a Cu alloy, etc.) or mixtures thereof.

The ratio of sintering aid to rare earth compound may range from 0.005 to 0.05 by volume. By weight, the ratio can vary depending on the specific gravity of the exact rare earth compound and sintering aid materials, but a sintering aid to rare earth compound weight ratio of 0.002 to 0.05 is typical.

As stated above, additional components may also be included within the slurry, including organic processing aids. As used herein, "organic processing aids" refers to any dispersants, surfactants, plasticizers, additives for controlled dispersion, thickeners, and/or latex binders present in the slurry. These organic processing aids are comprised primarily of carbon and other elements that volatilize during processing such that they are not present in the post-sintered coating.

As used herein, "dispersant" refers to compositions selected from the group consisting of polyacrylic acid, polyacrylic acid-polyethylene oxide copolymers, polymethacrylic acid, polyethylenimine, ammonium polyacrylate, ammonium polymethacrylate, sulfonated naphthalene formaldehyde condensate, polyvinyl sulfonic acid, and mixtures thereof.

As used herein, "plasticizer" refers to compositions selected from the group consisting of ethylene glycol, diethylene glycol, triethylene glycol, tetraethylene glycol glycerol, glycerin, polyethylene glycol, diethylene glycol monobutyl ether, and mixtures thereof.

As used herein, "surfactant" refers to compositions selected from the group consisting of fluorocarbons, dimethylsilicones, acetylenic glycol chemistries (e.g., commercial surfactants in the Surfynol^{®} series (Air Products and Chemicals, Inc.)), and mixtures thereof.

As used herein, "additive for controlled dispersion" refers to compositions selected from the group consisting of citric acid, glycine, dextrose, sucrose, mannose, tartaric acid, oxalic acid, and mixtures thereof.

As used herein, "latex binder" refers to compositions selected from the group consisting of polystyrene, polyvinyl alcohol, polyvinyl butyrol, styrenebutadiene copolymer, polyacrylic acid, polyacrylates, acrylic polymers, polymethyl methacrylate/polybutyl acrylate, polyvinyl acetate, polyvinyl malate, natural latex rubber, and mixtures thereof. Some examples of latex binders can include Rhoplex^{®} HA-8, Rhoplex^{®} HA-12, Pavecryl^{®} 2500 (Rohm and Haas).

In one embodiment, the slurry can be formed by combining the solvent (e.g., water and/or an organic solvent), dispersant, primary material, surfactant, and plasticizer desired with mixing media in a container for 3 hours to 15 hours. The mixture can be mixed using conventional techniques known to those skilled in the art, such as shaking with a 1 mm to 6.35 mm diameter alumina or zirconia mixing media, mixing via ball milling using a diameter of 6.35 mm to 25.4 mm alumina or zirconia mixing media, attritor milling using a 1 mm to a 5 mm diameter zirconia-based mixing media, planetary ball milling using from a 1 mm to a 5 mm diameter zirconia-based media, or mechanical mixing or stirring with simultaneous application of ultrasonic energy. The mixing media or ultrasonic energy can break apart any agglomerated ceramic particles in the slurry. Any mixing media present may subsequently be removed, for example, by straining.

Thickener may be added to the slurry if desired and the resulting mixture may be agitated by such methods as mechanical stirring, rolling, blending, shaking, and other like methods. Once the thickener is fully dissolved, generally after 5 minutes to 60 minutes, any secondary additive for controlled dispersion can be added if desired, and the resulting slurry may again be mixed using any of the above listed methods until the secondary additive dissolves, which again can be after from 5 minutes to 60 minutes. The addition of sintering aid may follow if desired, along with mixing using the previously described methods until the sintering aid dissolves, which can take from 5 minutes to 60 minutes. The latex binder may then be added if desired, and the slurry may be mixed by slow rolling, slow mechanical mixing, or other like methods to avoid trapping air bubbles in the slurry. This light mixing can be continued indefinitely, or alternately, once mixed, the slurry can be set aside until needed for application. In one embodiment, the slurry may be refreshed by adding additional water to account for that which has evaporated during processing. For example, "thickener" may refer to compositions selected from the group consisting of xanthan gum, polyethylene oxide, guar gum, methylcellulose and other soluble fiber, polyacrylic acid, polyvinylpyrolidone, and mixtures thereof.

Those skilled in the art will understand that the previous embodiment is one method for making the slurry compositions described herein, and that other methods are also acceptable.

If desired, masking can be applied to the ceramic component before the slurry is applied to prevent coating specific areas of the component. Masking may be accomplished using conventional techniques known to those skilled in the art including, but not limited to, tapes, tooling, and paint-on adhesives.

Once all desired masking of the ceramic component is complete, the slurry can be sprayed to produce a coated component via the suspension plasma spray process described herein.

Once the slurry has been applied to the ceramic component, and while the slurry is still wet, it may be leveled to remove excess slurry material. Leveling may be carried out using conventional techniques such as, but not limited to, spinning, rotating, slinging the component, dripping with or without applied vibration, or using a doctor blade, to remove excess slurry material. Similar to slurry application, leveling can be conducted manually or it may be automated, and it can be carried out in a humid environment because if the slurry dries too quickly, it can lead to defects in the coating during leveling.

Next, the coated component can be dried. Drying may be carried out in ambient or controlled temperature and humidity conditions. In one embodiment, controlled temperature and humidity can be utilized to help maintain the integrity of the applied slurry coating. More particularly, in one embodiment, drying may be carried out at temperatures of 5 °C to 100 °C, and in another embodiment, of 20 °C to 30 °C, and in an environment comprising from 10% relative humidity to 95% relative humidity, in one embodiment from 50% relative humidity to 90% relative humidity, and in yet another embodiment from 70% relative humidity to 80% relative humidity.

After drying, any masking present may be removed by peeling off tapes and adhesives, pyrolysis of tapes and adhesives, or by removing multi-use tooling. Any rough edges remaining after masking removal may be scraped or cut away using conventional means.

Next, burnout of the organic processing aids may be carried out by placing the dried component in an elevated temperature environment so that any bound water can be evaporated and the organic processing aids can be pyrolyzed. In one embodiment, burnout of the organic processing aids may be accomplished by heating the dried component at a rate of 1 °C/min to 15 °C/min to a temperature of 400 °C to 1000 °C and holding the component at this temperature for 0 to 2 hours. In another embodiment, the coated component may be heated at a rate of 2 °C/min to 6 °C/min to a temperature of 600 °C to 800 °C and holding the component at this temperature for 0 to 2 hours. In another embodiment, the hold time can be eliminated by slowly ramping up to the target temperature without holding, followed by ramping up or down to another temperature at a different rate. In another embodiment, binder burnout can occur rapidly by placing the coated component into a furnace heated to a temperature of 400 °C to 1400 °C.

The dried component may be sintered to produce a component comprising an environmental barrier coating. Sintering can serve to simultaneously densify and impart strength to the coating. Additionally, in the case of the outer layer of the EBC, sintering can impart a hermetic seal against high temperature steam present in the engine environment. Sintering can be carried out using a conventional furnace, or by using such methods as microwave sintering, laser sintering, infrared sintering, and the like. In one embodiment, the coating layer has a porosity of 20% to 40% porosity by volume after its application (prior to sintering). When a sintering agent is present in the slurry (and thus the formed coating), the sintering treatment may be performed to densify the coating to 85% of the theoretical density or greater.

Sintering can be accomplished by heating the dried component at a rate of 1 °C/min to 15 °C/min to a temperature of 1100 °C to 1700 °C and holding the component at that temperature for 0 to 24 hours. In another embodiment, sintering can be accomplished by heating the coated component at a rate of 5 °C/min to 15 °C/min to a sintereing temperature, such as described above, and holding the component at that temperature for 0 to 24 hours. In one particular embodiment, the sintering temperature may be 1300 °C to 1375 °C.

Alternately, in another embodiment, binder burnout and sintering can be carried out in a single process by heating at a rate of 1 °C/min to 15 °C/min to a temperature of 400 °C to 1000 °C and holding at this temperature for 0 to 2 hours. The component can then be heated at a rate of 1 °C/min to 15 °C/min from the binder burnout temperature from 1100 °C to 1700 °C and holding at his temperature for 0 to 24 hours, as set forth in the Examples below.

In an alternate embodiment, all layers of the EBC can be applied, one on top of the other, before masking removal, organic processing aid burnout, and sintering are carried out. Those skilled in the art will understand that after application of each layer, the layer should be at least partially dried before application of the subsequent layer.

In another embodiment, the sintering aid does not need to be added directly to every layer of the slurry to achieve the desired result. For example, in one embodiment, a slurry comprising at least the primary transition material of mullite, or a mullite/BSAS mixture, with no sintering aid may be applied to the ceramic component as a transition layer, dried, and sintered in either a vacuum, an inert atmosphere, or a reducing atmosphere (argon, argon 4% hydrogen, nitrogen, etc.). Next, a BSAS (primary outer material) slurry containing a sintering aid can be applied as the outer layer. Upon drying and sintering the outer layer, the sintering aid from the BSAS outer layer can diffuse into the transition layer to form secondary materials. Alternately, the transition layer slurry can comprise the sintering aid while the outer layer slurry does not. In this instance, during sintering the sintering aid can diffuse from the transition layer to the outer layer. In another embodiment, a primary material slurry with no sintering aid can be densified by applying the layer, allowing it to dry, and then back infiltrating a sol-gel solution comprised of a water soluble or solvent soluble sintering aid prior to heat treatment as explained below.

In one embodiment, the slurry deposition process may be used to form a layer that includes the compound of any of Formulas 1-9 as one of the layers of the EBC 108 (e.g., the outermost layer of the EBC 108) of the coating system 106, such that the compound may help protect any underlying EBC layers, the underlying bond coating, and the substrate 102. The substrate 102 may be formed from a ceramic matrix composite ("CMC") material, such as a silicon based, non-oxide ceramic matrix composite. As used herein, "CMC" refers to composite materials having ceramic fibers as a reinforcing material embedded within a ceramic matrix, and includes both non-oxide CMCs and oxide CMCs. As used herein, "monolithic ceramic" refers to materials without fiber reinforcement (e.g., having the matrix material only). Herein, CMCs and monolithic ceramics are collectively referred to as "ceramics."

Some examples of CMCs acceptable for use herein can include, but are not limited to, materials having a matrix and reinforcing fibers comprising non-oxide carbon or silicon-based materials such as silicon carbide, silicon nitride, and mixtures thereof. Examples include, but are not limited to, CMCs with silicon carbide matrix and silicon carbide fiber; silicon nitride matrix and silicon carbide fiber; and silicon carbide/silicon nitride matrix mixture and silicon carbide fiber. Furthermore, CMCs can have a matrix and reinforcing fibers comprising oxide ceramics. Specifically, the oxide-oxide CMCs may be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃ 2SiO₂), as well as glassy aluminosilicates.

As shown, the bond coating 104 is optionally positioned on the surface 103 of the substrate 102 between the substrate 102 and the EBC 108. When present, the bond coating 104 includes silicon or a silicon based material (e.g., a silicide, etc.). Generally, the bond coating 104 is relatively thin, such as having a thickness that is 25 micrometers (µm) to 275 µm, such as 25 µm to 150 µm (e.g., 25 µm to 100 µm).

FIG. 2 shows a thermally grown oxide ("TGO") layer 105, which may form on the surface of the silicon-based bond coating 104, such as a layer of silicon oxide (sometimes referred to as "silicon oxide scale" or "silica scale"), during exposure to oxygen (e.g., during manufacturing and/or use) of the component 100.

The coated component 100 of FIG. 1 is particularly suitable for use as a component found in high temperature environments, such as those present in gas turbine engines, for example, combustor components, turbine blades, shrouds, nozzles, heat shields, and vanes. In particular, the turbine component can be a CMC component positioned within a hot gas flow path of the gas turbine such that the coating system 106 forms an environmental barrier for the underlying substrate 102 to protect the component 100 within the gas turbine when exposed to the hot gas flow path.

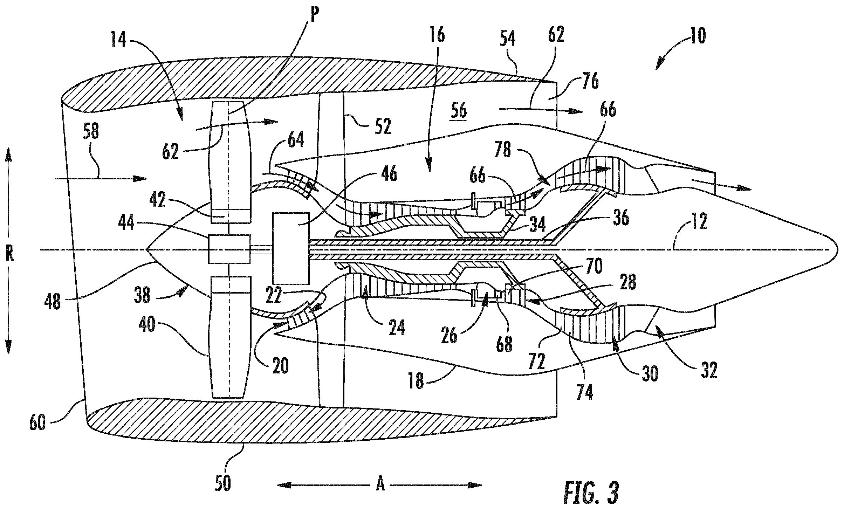

FIG. 3 is a schematic cross-sectional view of a gas turbine engine in accordance with an exemplary embodiment of the present disclosure. More particularly, for the embodiment of FIG. 3, the gas turbine engine is a high-bypass turbofan jet engine 10, referred to herein as "turbofan engine 10." As shown in FIG. 3, the turbofan engine 10 defines an axial direction A (extending parallel to a longitudinal centerline 12 provided for reference) and a radial direction R. In general, the turbofan 10 includes a fan section 14 and a core turbine engine 16 disposed downstream from the fan section 14. Although described below with reference to a turbofan engine 10, the present disclosure is applicable to turbomachinery in general, including turbojet, turboprop and turboshaft gas turbine engines, including industrial and marine gas turbine engines and auxiliary power units.

The exemplary core turbine engine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22.

For the embodiment depicted, the fan section 14 includes a variable pitch fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable actuation member 44 configured to collectively vary the pitch of the fan blades 40 in unison. The fan blades 40, disk 42, and actuation member 44 are together rotatable about the longitudinal axis 12 by LP shaft 36 across an optional power gear box 46. The power gear box 46 includes a plurality of gears for stepping down the rotational speed of the LP shaft 36 to a more efficient rotational fan speed.

Referring still to the exemplary embodiment of FIG. 3, the disk 42 is covered by rotatable front nacelle 48 aerodynamically contoured to promote an airflow through the plurality of fan blades 40. Additionally, the exemplary fan section 14 includes an annular fan casing or outer nacelle 50 that circumferentially surrounds the fan 38 and/or at least a portion of the core turbine engine 16. It should be appreciated that the nacelle 50 may be configured to be supported relative to the core turbine engine 16 by a plurality of circumferentially-spaced outlet guide vanes 52. Moreover, a downstream section 54 of the nacelle 50 may extend over an outer portion of the core turbine engine 16 so as to define a bypass airflow passage 56 therebetween.

During operation of the turbofan engine 10, a volume of air 58 enters the turbofan 10 through an associated inlet 60 of the nacelle 50 and/or fan section 14. As the volume of air 58 passes across the fan blades 40, a first portion of the air 58 as indicated by arrows 62 is directed or routed into the bypass airflow passage 56 and a second portion of the air 58 as indicated by arrow 64 is directed or routed into the LP compressor 22. The ratio between the first portion of air 62 and the second portion of air 64 is commonly known as a bypass ratio. The pressure of the second portion of air 64 is then increased as it is routed through the high pressure (HP) compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the turbofan 10, also providing propulsive thrust. The HP turbine 28, the LP turbine 30, and the jet exhaust nozzle section 32 at least partially define a hot gas path 78 for routing the combustion gases 66 through the core turbine engine 16.

Further aspects of the invention are provided by the subject matter of the following clauses:
1. A method of forming a coating on a surface of a substrate, the method comprising: preheating the surface of the substrate to a preheat temperature, wherein the substrate comprises a ceramic matrix composite; thereafter, spraying a slurry suspension onto the surface of the substrate to form a coating, wherein the slurry composition comprises a rare earth compound, a sintering agent, and a solvent, wherein the rare earth compound has the formula: A_{1-b}B_{b}Z_{1-d}D_{d}MO₆ where A is Al, Ga, In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof; b is 0 to 0.5; Z is Hf, Ti, or a mixture thereof; D is Zr, Ce, Ge, Si, or a mixture thereof; d is 0 to 0.5; and M is Ta, Nb, or a mixture thereof; and thereafter, heat treating the coating at a sintering temperature to densify the coating from an initial porosity to a sintered porosity.
2. The method of any preceding clause, wherein the preheat temperature is 200 °C to 1000 °C, and wherein the sintering temperature is 1300 °C to 1600 °C.
3. The method of any preceding clause, wherein the slurry suspension is sprayed via a plasma torch traversing across the surface of the substrate at a rate of 1000 mm/s to 2000 mm/s to form the coating.
4. The method of any preceding clause, wherein the slurry suspension is sprayed via a plasma torch utilizing a plasma gas in combination with the slurry composition.
5. The method of any preceding clause, wherein the plasma gas has a composition that includes argon, nitrogen, hydrogen, helium, or a mixture thereof.
6. The method of any preceding clause, wherein the plasma gas has a flow rate of 200 lpm to 250 lpm.
7. The method of any preceding clause, wherein the slurry suspension has a flow rate of 1 mL/min to 70 mL/min.
8. The method of any preceding clause, wherein the initial porosity is 20% to 40% porosity by volume, and wherein the sintered porosity is 85% of the theoretical density or greater.
9. The method of any preceding clause, further comprising: prior to spraying the slurry suspension, forming a bond coating on the surface of the substrate such that the slurry suspension is applied over the bond coating.
10. The method of any preceding clause, wherein the layer has a thickness of 1 µm to 1 mm.
11. The method of any preceding clause, wherein b is 0, and wherein A consists of an element selected from the group consisting of Al, Ga, In, Sc, Y, Ce, Pr, Nd, Pm, Sm, Eu, Gd, Tb, Dy, Ho, Er, Tm, Yb, Lu, Fe, Cr, Co, Mn, and Bi.
12. The method of any preceding clause, wherein b is greater than 0 to 0.5, wherein d is 0, wherein Z includes Hf, and wherein M includes Ta.
13. The method of any preceding clause, wherein A includes Al in combination with another element and wherein Z includes Hf such that the compound has the formula: AlₓA'ₐB_{b}Ln_{1-x-a-b}Hf_{1-t-d}TiₜD_{d}MO₆ where: x is 0.01 to 0.99 such that Al is present in the compound; A' is Ga, In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof; a is 0 to 0.99; b is 0 to 0.5, with 1-x-a-b being 0 to 0.99 such that Ln is present in the compound; Ln is Sc, Y, La, Ce, Pr, Nd, Pm, Sm, Eu, Gd, Tb, Dy, Ho, Er, Tm, ytterbium Yb, Lu, or a mixture thereof, and wherein Ln is different than A in terms of composition; t is 0 to 0.99; D is Zr, Ce, Ge, Si, or a mixture thereof; d is 0 to 0.5; the sum of t and d is less than 1 such that Hf is present in the compound; and M is Ta, Nb, or a mixture thereof.
14. The method of any preceding clause, where b is 0, and where t is 0.
15. The method of any preceding clause, where d is 0, and where M is Ta.
16. The method of any preceding clause, wherein A includes Al and Ga in combination with another element and wherein Z includes Hf such that the compound has the formula: AlₓGa_{y}B_{b}Ln_{1-x-y-b}Hf_{1-t-d}TiₜD_{d}MO₆ where: x is 0.01 to 0.99 such that Al is present in the compound; y is 0.01 to 0.99 such that Ga is present in the compound; b is 0 to 0.5, with 1-x-a-b being 0 to 0.99 such that Ln is present in the compound; Ln is Sc, Y, La, Ce, Pr, Nd, Pm, Sm, Eu, Gd, Tb, Dy, Ho, Er, Tm, ytterbium Yb, Lu, or a mixture thereof, and wherein Ln is different than A in terms of composition; t is 0 to 0.99; D is Zr, Ce, Ge, Si, or a mixture thereof; d is 0 to 0.5; the sum of t and d is less than 1 such that Hf is present in the compound; and M is Ta, Nb, or a mixture thereof.
17. The method of any preceding clause, wherein the rare earth compound has the formula: Al_{1-x-y}A'ₓA"_{y}HfTaO₆ where A' is Er, Sm, or a mixture thereof; x is 0.3 to 0.45; A" is In, Ga, or a mixture thereof; y is 0.15 to 0.35; and (x + y) is 0.5 to 0.7 such that Al is present from 0.3 to 0.5.
18. The method of any preceding clause, wherein A' is either Er or Sm, A" is either In or Ga.
19. The method of any preceding clause, wherein the rare earth compound has the formula: Al_{1-x-y}ErₓGa_{y}HfTaO₆ where x is 0.4 to 0.6; y is 0 to 0.4; and (x + y) is 0.5 to 0.85 such that Al is present from 0.15 to 0.5.
20. The method of any preceding clause, wherein the rare earth compound has the formula: AlₓSc₁₋ₓHfTaO₆ where x is 0.01 to 0.1 such that Al is present from 0.01 to 0.1 and Sc is present from 0.9 to 0.99.

This written description uses exemplary embodiments to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method of forming a coating (108) on a surface (103) of a substrate (102), the method comprising:
preheating the surface (103) of the substrate (102) to a preheat temperature, wherein the substrate (102) comprises a ceramic matrix composite;
thereafter, spraying a slurry suspension onto the surface (103) of the substrate (102) to form a coating (108), wherein the slurry composition comprises a rare earth compound, a sintering agent, and a solvent, wherein the rare earth compound has the formula: A_{1-b}B_{b}Z_{1-d}D_{d}MO₆ where A is Al, Ga, In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof; b is 0 to 0.5; Z is Hf, Ti, or a mixture thereof; D is Zr, Ce, Ge, Si, or a mixture thereof; d is 0 to 0.5; and M is Ta, Nb, or a mixture thereof; and
thereafter, heat treating the coating (108) at a sintering temperature to densify the coating (108) from an initial porosity to a sintered porosity.

2. The method of any preceding claim, wherein the preheat temperature is 200 °C to 1000 °C, and wherein the sintering temperature is 1300 °C to 1600 °C.

3. The method of any preceding claim, wherein the slurry suspension is sprayed via a plasma torch traversing across the surface (103) of the substrate (102) at a rate of 1000 mm/s to 2000 mm/s to form the coating (108).

4. The method of any preceding claim, wherein the slurry suspension is sprayed via a plasma torch utilizing a plasma gas in combination with the slurry composition.

5. The method of any preceding claim, wherein the plasma gas has a composition that includes argon, nitrogen, hydrogen, helium, or a mixture thereof,
wherein the plasma gas has a flow rate of 200 lpm to 250 lpm, wherein the slurry suspension has a flow rate of 1 mL/min to 70 mL/min.

6. The method of any preceding claim, wherein the initial porosity is 20% to 40% porosity by volume, and wherein the sintered porosity is 85% of the theoretical density or greater.

7. The method of any preceding claim, further comprising:
prior to spraying the slurry suspension, forming a bond coating (104) on the surface (103) of the substrate (102) such that the slurry suspension is applied over the bond coating (104).

8. The method of any preceding claim, wherein the layer has a thickness of 1 µm to 1 mm.

9. The method of any preceding claim, wherein b is 0, and wherein A consists of an element selected from the group consisting of Al, Ga, In, Sc, Y, Ce, Pr, Nd, Pm, Sm, Eu, Gd, Tb, Dy, Ho, Er, Tm, Yb, Lu, Fe, Cr, Co, Mn, and Bi.

10. The method of any preceding claim, wherein b is greater than 0 to 0.5, wherein d is 0, wherein Z includes Hf, and wherein M includes Ta.

11. The method of any preceding claim, wherein A includes Al in combination with another element and wherein Z includes Hf such that the compound has the formula:
AlₓA'ₐB_{b}Ln_{1-x-a-b}Hf_{1-t-d}TiₜD_{d}MO₆
where:
x is 0.01 to 0.99 such that Al is present in the compound;
A' is Ga, In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof;
a is 0 to 0.99;
b is 0 to 0.5, with 1-x-a-b being 0 to 0.99 such that Ln is present in the compound;
Ln is Sc, Y, La, Ce, Pr, Nd, Pm, Sm, Eu, Gd, Tb, Dy, Ho, Er, Tm, ytterbium Yb, Lu, or a mixture thereof, and wherein Ln is different than A in terms of composition;
t is 0 to 0.99;
D is Zr, Ce, Ge, Si, or a mixture thereof;
d is 0 to 0.5;
the sum of t and d is less than 1 such that Hf is present in the compound; and
M is Ta, Nb, or a mixture thereof.

12. The method of any preceding claim,
where b is 0, and where t is 0; or
where d is 0, and where M is Ta.

13. The method of any preceding claim, wherein A includes Al and Ga in combination with another element and wherein Z includes Hf such that the compound has the formula:
AlₓGa_{y}B_{b}Ln_{1-x-y-b}Hf_{1-t-d}TiₜD_{d}MO₆
where:
x is 0.01 to 0.99 such that Al is present in the compound;
y is 0.01 to 0.99 such that Ga is present in the compound;
b is 0 to 0.5, with 1-x-a-b being 0 to 0.99 such that Ln is present in the compound;
Ln is Sc, Y, La, Ce, Pr, Nd, Pm, Sm, Eu, Gd, Tb, Dy, Ho, Er, Tm, ytterbium Yb, Lu, or a mixture thereof, and wherein Ln is different than A in terms of composition;
t is 0 to 0.99;
D is Zr, Ce, Ge, Si, or a mixture thereof;
d is 0 to 0.5;
the sum of t and d is less than 1 such that Hf is present in the compound; and
M is Ta, Nb, or a mixture thereof.

14. The method of any preceding claim,
wherein the rare earth compound has the formula: Al_{1-x-y}A'ₓA"_{y}HfTaO₆ where A' is Er, Sm, or a mixture thereof; x is 0.3 to 0.45; A" is In, Ga, or a mixture thereof; y is 0.15 to 0.35; and (x + y) is 0.5 to 0.7 such that Al is present from 0.3 to 0.5; or
wherein the rare earth compound has the formula: Al_{1-x-y}ErₓGa_{y}HfTaO₆ where x is 0.4 to 0.6; y is 0 to 0.4; and (x + y) is 0.5 to 0.85 such that Al is present from 0.15 to 0.5; or
wherein the rare earth compound has the formula: AlₓSc₁₋ₓHfTaO₆ where x is 0.01 to 0.1 such that Al is present from 0.01 to 0.1 and Sc is present from 0.9 to 0.99.

15. The method of claim 14, wherein A' is either Er or Sm, A" is either In or Ga.
